# EUROPÄISCHE PATENTSCHRIFT

(11) **EP 1 155 959 B1**
(45) Veröffentlichungstag und Bekanntmachung des Hinweises auf die Patenterteilung: **29.12.2004**
(21) Anmeldenummer: 00810439.0
(22) Anmeldetag: 19.05.2000
(51) Int. Cl.: B64F 1/305, F24F 13/02

(54) **Teleskoprohr zum Zuführen von klimatisierter Luft zu einem wartenden Flugzeug**
Telescopic duct for supplying air conditioning to a waiting aircraft
Gaine téléscopique de conditionnement d'air pour un avion en attente

(43) Veröffentlichungstag der Anmeldung: 21.11.2001
(73) Patentinhaber: IST-Edelstahl-Anlagenbau AG, 3645 Gwatt, Thun (CH)
(72) Erfinder: Zimmermann , Kurt, 3600 Thun (CH)
(74) Vertreter: BOVARD AG - Patentanwälte

(56) Entgegenhaltungen:
- GB-A- 2 086 524
- US-A- 3 399 545
- US-A- 4 357 860
- US-A- 4 526 090
- US-A- 4 543 677

## Beschreibung

Die Erfindung betrifft ein Teleskoprohr zum Zuführen von klimatisierter Luft zu einem wartenden Flugzeug entlang einer teleskopischen Fluggastbrücke, mit einem Aussenrohr und mindestens einem an einem Ende des Aussenrohres in dieses hinein ragenden und in diesem teleskopisch verschiebbaren Innenrohr und mit Mitteln zum Befestigen des Teleskoprohres an der Fluggastbrücke.

In modernen Flughafenbauten sind zentrale Flugzeugenergieversorgungsanlagen eingebaut, die unter anderem klimatisierte, das heisst hinsichtlich Temperatur und Feuchtigkeit aufbereitete Luft zur Verfügung stellen. Diese Luft wird mittels Teleskoprohren entlang von Fluggastbrücken geführt. Diese Rohre müssen die teleskopischen Bewegungen der Fluggastbrücke mitmachen und thermisch isoliert sein, damit die durch sie geführte Luft nicht übermässig erwärmt oder abgekühlt wird, insbesondere auch zur Vermeidung von Kondenswasserbildung auf der Aussen- oder Innenseite.

Eine bekannte Konstruktion dieser Art ist in der Patentschrift US 4 357 860 beschrieben. Das Patent beschreibt insbesondere die Anordnung und Befestigung der Rohre an der Fluggastbrücke sowie die gegenseitige Abdichtung und Führung der Rohre. ferner ist erwähnt, dass gemäss der US Patentschrift 3 399 545 die Rohre aus faserverstärktem Kunststoff gewickelt sind.

Ausgehend von diesem Stand der Technik hat die vorliegende Erfindung die Aufgabe, ein einfach herzustellendes, wartungs- und verlustarm betreibbares und widerstandsfähiges Teleskoprohr vorzuschlagen.

Diese Aufgabe wird durch ein Teleskoprohr gelöst, das dadurch gekennzeichnet ist, dass das Aussenrohr und das mindestens eine Innenrohr jeweils aus einem Aussenmantel aus Metall und einem im Abstand vom Aussenmantel angeordneten Innenmantel aus Metall bestehen.

Dieses Teleskoprohr hat gegenüber dem bekannten Stand der Technik den Vorteil, dass es durch den einfachen Aufbau des Aussenrohres und des mindestens einen Innenrohres wesentlich einfacher als die bekannten Kunststoffrohre an die Länge verschiedener Fluggastbrücken angepasst werden kann. Das Aussenrohr und das Innenrohr sind durch den genannten Aufbau auch bei grossen Längen selbsttragend. Auch ist bei den Metallrohren die Gefahr eines Bruches, beispielsweise durch Kollisionen mit Fahrzeugen, praktisch ausgeschlossen. Zudem haben die metallenen Innenoberflächen der Rohre gegenüber den bekannten, gewickelten Konstruktionen aus Kunststoff eine viel geringere Oberflächenrauhigkeit, wodurch weniger Strömungswiderstand besteht und folglich weniger Druckverlust entsteht.

Das Metall, aus dem der Aussenmantel und der Innenmantel des Aussenrohres und des Innenrohres bestehen, ist vorzugsweise Edelstahl. Besonders bevorzugt sind beim Aussenrohr und beim Innenrohr jeweils zwischen dem Aussenmantel und dem Innenmantel Ringe in axialen Abständen voneinander angeordnet, durch welche der Aussenmantel auf dem Innenmantel zentriert ist und welche den zwischen dem Aussenmantel und dem Innenmantel vorhandenen Zwischenraum in einzelne Kammern unterteilen. Diese Kammern sind vorzugsweise mit einem thermisch isolierenden Material, beispielsweise mit einem Kunststoffschaum, gefüllt. Wenn nach einer weiteren bevorzugten Ausführungsart am Ende des Aussenrohres, in welches das Innenrohr ragt, Rollen angeordnet sind, welche mit der Aussenoberfläche des Aussenmantels des Innenrohres in Kontakt stehen und am Ende des Innenrohres, welches in das Aussenrohr ragt weitere Rollen angeordnet sind, welche mit der Innenoberfläche des Innenmantels des Aussenrohres in Kontakt stehen, laufen die Bewegungen des Innenrohres im Aussenrohr praktisch verschleissfrei ab, wodurch das Teleskoprohr mit noch weniger Wartungsaufwand betrieben werden kann. Um das Innenrohr im Aussenrohr exakt zu zentrieren und um einen übermässigen Druck durch die Rollen zu vermeiden, können diese in bezug auf die Längsachse des Teleskoprohres radial verstellbar sein.

Im folgenden wird ein Ausführungsbeispiel der Erfindung unter Bezugnahme auf die beiliegenden Zeichnungen erläutert. Es zeigt
- Figur 1: einen schematischen Längsschnitt durch ein Ausführungsbeispiel eines an einer Fluggastbrücke befestigten Teleskoprohres,
- Figur 2: einen Querschnitt entlang der Linie II - II in Figur 1 in einem gegenüber Figur 1 vergrösserten Massstab und
- Figur 3: einen Querschnitt entlang der Linie III - III in Figur 1 in einem gegenüber Figur 1 vergrösserten Massstab.

Die hier rein beispielsweise beschriebene, in den Figuren schematisch dargestellte Anlage ist wie folgt aufgebaut. Ein Aussenrohr 1, bestehend aus einem Aussenmantel 2 und einem Innenmantel 3, ist an einem flugzeugnahen Segment 8 einer Fluggastbrücke 7 mittels Aufhängungen 10 und 11 befestigt. Der Innendurchmesser des Aussenmantels 2 beträgt 554 mm und der Innendurchmesser des Innenmantels 3 beträgt 504 mm. Ein ebenfalls aus Aussenmantel 5 und Innenmantel 6 bestehendes Innenrohr 4 ist teleskopisch im Aussenrohr 1 verschiebbar und am gebäudenahen Segment 9 der Fluggastbrücke 7 mittels der Aufhängung 12 gehalten. Der Innendurchmesser des Aussenmantels 5 beträgt 454 mm und der Innendurchmesser des Innenmantels 6 beträgt 404 mm. Das Aussenrohr 1 und das Innenrohr 4 haben in diesem Beispiel eine Länge von jeweils 16 Metern. Dies ist wie gesagt nur ein Beispiel, in der Praxis wird der Durchmesser der Rohre dem Luftbedarf angepasst und die Länge der Rohre richtet sich nach der Länge der Fluggastbrücke. Die Länge kann zwischen 8 und 20 Metern betragen. Die Luft wird vom Gebäude her dem Innenrohr 4 über einen Eintrittsstutzen 13 zugeführt und verlässt das Aussenrohr 1 über einen Austrittsstutzen 14, von wo sie über einen Schlauch zum Flugzeug weiter geleitet wird.

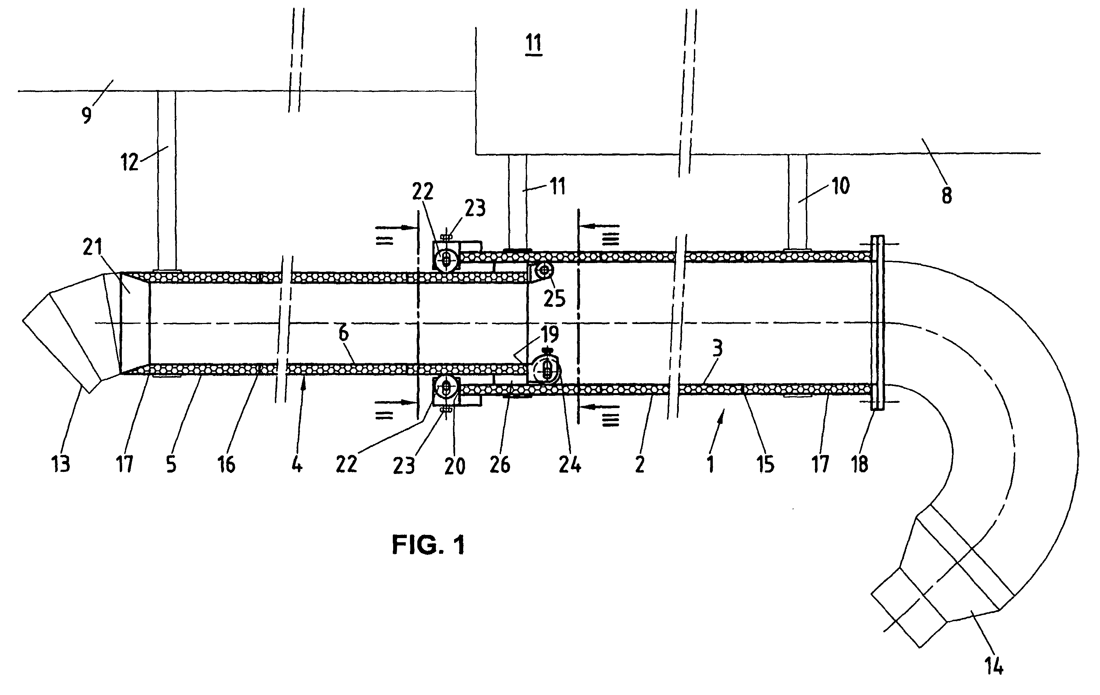

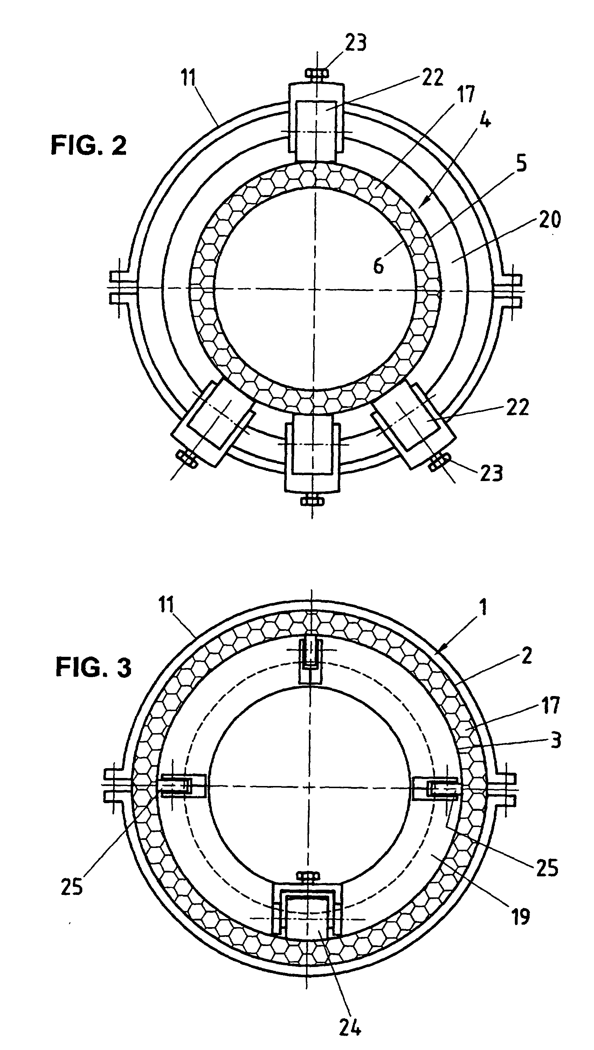

Sowohl das Aussenrohr 1 als auch das Innenrohr 4 sind so aufgebaut, dass zwischen dem aus Edelstahl bestehenden Innenmantel 3 bzw. 6 und dem ebenfalls aus Edelstahl bestehenden Aussenmantel 2 bzw. 5 Zwischenringe 15, 16 vorhanden sind, welche nicht nur für eine genaue Zentrierung sorgen, sondern auch den Hohlraum zwischen Innenmantel und Aussenmantel in Kammern unterteilen und darüber hinaus die mechanische Festigkeit, insbesondere den Widerstand gegen Verformung, wesentlich erhöhen. Diese Kammern sind durch (nicht dargestellte) Öffnungen im Aussenmantel mit einem Schaumstoff 17 gefüllt, der die gewünschte thermische Isolation gewährleistet und darüber hinaus auch unerwünschte Schwingungen der Rohre dämpft. Die Enden des Aussenrohres 1 sind durch einen Flansch 18 und einen Endring 19 verschlossen, diejenigen des Innenrohres 4 durch einen Endring 20 und einen kegelstumpfförmigen Abschlussring 21. Um eine praktisch verschleissfreie Bewegung der Rohre zu gewährleisten, sind am in Figur 1 linken Ende des Aussenrohres 1 Rollen 22 am Endring 20 befestigt. Die Anordnung der Rollen 22 ist besser in Figur 2 zu sehen, die einen Querschnitt entlang der Linie II - II von Figur 1 darstellt. Mit 23 sind Einstellschrauben bezeichnet, mit denen die Rollen 22 radial in einem Bereich verschiebbar sind, so dass das Innenrohr 4 genau im Aussenrohr 1 zentriert werden kann. Da sowohl das Aussenrohr 1 als auch das Innenrohr 4 durch ihr Eigengewicht eine gewisse Durchbiegung erfahren, sind auch am Endring 19 des Innenrohrs 4 Rollen 24, 25 angebracht. Figur 3, welche einen Querschnitt entlang der Linie III - III von Figur 1 darstellt, zeigt, dass unten am Innenrohr 4 eine Tragrolle 24 mit entsprechen dem Radius des Innenmantefs 6 gewölbter Oberfläche angeordnet ist. Führungsrollen 25, die schmaler sind als die Tragrolle 24, sorgen für die Zentrierung des Innenrohres 4 im Aussenrohr 1. Um den Verschleiss während den Relativbewegungen der Rohre weiter zu verringern, können die Rollen 22, 24, beschichtet sein, beispielsweise mit Gummi. Damit die durch das Teleskoprohr geführte Luft nicht entweichen kann, ist am Ende des Innenrohres 4 eine Dichtung 26 angeordnet, die bei den Teleskopbewegungen im Aussenrohr gleitet. Selbstverständlich könnte die Dichtung auch am Ende des Aussenrohres 1 angeordnet sein, so dass das Innenrohr 4 bei den Teleskopbewegungen in der Dichtung gleiten würde.

Es liegt auf der Hand, dass durch den beschriebenen einfachen Aufbau des Aussenrohres 1 und des Innenrohres 4 diese sehr leicht in der geforderten Länge fabriziert werden können.

Obwohl das oben beschriebene und dargestellte Ausführungsbeispiel der Erfindung nur zwei Rohre, nämlich das Aussenrohr 1 und das Innenrohr 4 hat, kann das erfindungsgemässe Prinzip selbstverständlich auch mit drei oder mehr Rohren verwirklicht werden. Beispielsweise könnte am in Figur 1 linken Ende des Innenrohres 4 anstelle des Eintrittsstutzens 13 ein weiteres Innenrohr vorgesehen sein, das einen Aussendurchmesser hat, der kleiner ist als der Innendurchmesser des Innenrohres 4 und das teleskopisch in das Innenrohr 4 hinein ragt.

## Patentansprüche

1. Teleskoprohr zum Zuführen von klimatisierter Luft zu einem wartenden Flugzeug entlang einer teleskopischen Fluggastbrücke, mit einem Aussenrohr (1) und mindestens einem an einem Ende des Aussenrohres (1) in dieses hinein ragenden und in diesem teleskopisch verschiebbaren Innenrohr (4) und mit Mitteln (10, 11, 12) zum Befestigen des Teleskoprohres an der Fluggastbrücke, **dadurch gekennzeichnet, dass** das Aussenrohr (1) und das mindestens eine Innenrohr (4) jeweils aus einem Aussenmantel (2, 5) aus Metall und einem im Abstand vom Aussenmantel angeordneten Innenmantel (3, 6) aus Metall bestehen.

2. Teleskoprohr nach Anspruch 1, **dadurch gekennzeichnet, dass** das Metall Edelstahl ist.

3. Teleskoprohr nach einem der vorangehenden Ansprüche, **dadurch gekennzeichnet, dass** beim Aussenrohr (1) und beim mindestens einen Innenrohr (4) jeweils zwischen dem Aussenmantel (2, 5) und dem Innenmantel (3, 6) Ringe (15, 16) in axialen Abständen voneinander angeordnet sind.

4. Teleskoprohr nach einem der vorangehenden Ansprüche, **dadurch gekennzeichnet, dass** beim Aussenrohr (1) und beim mindestens einen Innenrohr (4) jeweils der zwischen dem Aussenmantel (2, 5) und dem Innenmantel (3, 6) vorhandene Raum mit einem thermisch isolierenden Material, beispielsweise mit einem Kunststoffschaum, ausgefüllt ist.

5. Teleskoprohr nach einem der vorangehenden Ansprüche, **dadurch gekennzeichnet, dass** am Ende des Aussenrohres (1), in welches das Innenrohr (4) ragt, Rollen (22) angeordnet sind, welche mit der Aussenoberfläche des Aussenmantels (5) des Innenrohres (4) in Kontakt stehen und dass am Ende des Innenrohres (4), welches in das Aussenrohr (1) ragt weitere Rollen (24, 25) angeordnet sind, welche mit der Innenoberfläche des Innenmantels (3) des Aussenrohres (1) in Kontakt stehen.

6. Teleskoprohr nach Anspruch 5, **dadurch gekennzeichnet, dass** mindestens eine der Rollen (22) und/oder mindestens eine der weiteren Rollen (24, 25) in bezug auf die Längsachse des Teleskoprohres radial verstellbar ist.

## Claims

1. Telescopic duct for supplying air conditioning to a waiting aircraft along a telescopic passenger bridge, with an outer pipe (1) and at least one inner pipe (4) projecting into this outer pipe (1) at one end thereof and telescopically displaceable therein, and means (10, 11, 12) to attach the telescopic duct to the passenger bridge, **characterised in that** the outer pipe (1) and the at least one inner pipe (4) are each composed of an outer jacket (2, 5) of metal and an inner jacket (3, 6) of metal, disposed spaced apart from the outer jacket.

2. Telescopic duct according to claim 1, **characterised in that** the metal is stainless steel.

3. Telescopic duct according to one of the preceding claims, **characterised in that** rings (15, 16) are disposed, spaced axially apart from one another, in each case between the outer jacket (2, 5) and the inner jacket (3, 6) at the outer pipe (1) and at the at least one inner pipe (4)

4. Telescopic duct according to one of the preceding claims, **characterised in that** the space present between the outer jacket (2, 5) and the inner jacket (3, 6) in each case at the outer pipe (1) and at the at least one inner pipe (4) is filled with a thermally insulating material, for example foam of synthetic material.

5. Telescopic duct according to one of the preceding claims, **characterised in that** disposed at the end of the outer pipe (1) into which the inner pipe (4) projects are rollers (22) which are in contact with the outer surface of the outer jacket (5) of the inner pipe (4), and **in that** disposed at the end of the inner pipe (4) which projects into the outer pipe (1) are further rollers (24, 25) which are in contact with the inner surface of the inner jacket (3) of the outer pipe (1).

6. Telescopic duct according to claim 5, **characterised in that** at least one of the rollers (22) and/or at least one of the further rollers (24, 25) is radially adjustable in relation to the longitudinal axis of the telescopic duct.

## Revendications

1. Gaine télescopique pour l'amenée de l'air climatisé à un avion en attente le long d'une passerelle passager télescopique, avec une gaine extérieure (1 ) et au moins une gaine intérieur (4) s'enfilant dans cette dernière de manière coulissante en s'engageant à une extrémité de la gaine extérieure (1), et des moyens (10, 11, 12) pour la fixation de la gaine télescopique à la passerelle passager, **caractérisé en ce que** la gaine extérieure (1) et au moins la gaine intérieure (4) se composent respectivement d'une enveloppe externe (2, 5) en métal et d'une enveloppe interne (3, 6) disposée à distance de l'enveloppe externe.

2. Gaine télescopique selon la revendication 1, **caractérisée en ce que** le métal est de l'acier fin.

3. Gaine télescopique selon l'une des revendications précédentes, **caractérisée en ce qu'**au niveau de la gaine extérieure (1) et au moins d'une gaine intérieure (4), il est disposé respectivement entre la gaine extérieure (2, 5) et la gaine intérieure (3, 6), des anneaux (15, 16) à distance les uns des autres.

4. Gaine télescopique selon l'une des revendications précédentes, **caractérisée en ce qu'**au niveau de la gaine extérieure (1) et au moins d'une gaine intérieure (4), respectivement l'espace existant entre la gaine extérieure (2, 5) et la gaine intérieure (3, 6) est rempli d'un matériau thermiquement isolant par exemple d'une mousse plastique.

5. Gaine télescopique selon l'une des revendications précédentes, **caractérisée en ce qu'**à l'extrémité de la gaine extérieure (1), dans laquelle s'engage la gaine intérieure (4), sont disposés des galets (22) qui sont en contact avec la surface externe de l'enveloppe externe (5) de la gaine intérieure (4) et **en ce qu'**à l'extrémité de la gaine intérieure (4), qui s'engage dans la gaine extérieure (1) sont disposés d'autres galets (24, 25) qui sont en contact avec la surface intérieure de l'enveloppe interne (3) de la gaine extérieure (1).

6. Gaine télescopique selon la revendication 5, **caractérisé en ce qu'**au moins l'un des galets (22) et/ou l'un des autres galets (24, 25) sont réglables radialement par rapport à l'axe longitudinal de la gaine télescopique.
